# EUROPÄISCHE PATENTSCHRIFT

(11) **EP 1 608 522 B1**
(45) Veröffentlichungstag und Bekanntmachung des Hinweises auf die Patenterteilung: **31.10.2018**
(21) Anmeldenummer: 04717617.7
(22) Anmeldetag: 05.03.2004
(51) Int. Cl.: B60H 1/34, F24F 13/06

(54) **LUFTAUSSTRÖMER, INSBESONDERE FÜR EIN KRAFTFAHRZEUG UND EIN ZUGEHÖRIGES LUFTAUSSTRÖMVERFAHREN**
AIR EXHAUSTING DEVICE, IN PARTICULAR FOR A VEHICLE AND CORRESPONDING METHOD FOR EXHAUSTING AIR
DISPOSITIF D'EVACUATION D'AIR, EN PARTICULIER POUR UN VEHICULE ET PROCEDE D'EVACUATION D'AIR CORRESPONDANT

(30) Priorität: 13.03.2003 DE 10311397
(43) Veröffentlichungstag der Anmeldung: 28.12.2005
(73) Patentinhaber: MAHLE Behr GmbH & Co. KG, 70469 Stuttgart (DE)
(72) Erfinder: BURR, Reinhold, 89518 Heidenheim (DE); KLINGLER, Dietrich, 73540 Heubach (DE); VOIGT, Klaus, 74321 Bietigheim-Bissingen (DE)
(74) Vertreter: Grauel, Andreas
(86) Internationale Anmeldenummer: PCT/EP2004/002295
(87) Internationale Veröffentlichungsnummer: WO 2004/080739

(56) Entgegenhaltungen:
- EP-A- 1 099 914
- DE-A- 3 736 448
- DE-U- 8 808 280
- DE-U- 29 914 962

## Beschreibung

Die Erfindung betrifft einen Luftausströmer, insbesondere für ein Kraftfahrzeug, gemäß dem Oberbegriff des Anspruchs 1.

Aus der EP 1 223 061 A2 ist ein Luftausströmer, insbesondere zur Fahrzeugklimatisierung, mit einem Rahmen, mehreren Lamellen, die um eine erste Achse verschwenkbar angeordnet sind, und mindestens einem Koppelelement, mit dem jede der Lamellen gekoppelt ist, wobei das Koppelelement relativ zur ersten Achse zwischen einer Neutralstellung, in der die Lamellen zueinander parallel sind, und einer Komfortstellung verstellbar sind, in der mindestens ein Teil der Lamellen in zueinander entgegengesetzter Richtung verschwenkbar ist. Der Luftausströmer ist vor einem Luftkanal angeordnet, aus dem ein Luftstrom austritt, dessen Richtung mit Hilfe des Luftausströmers eingestellt werden kann. Dabei kann der Luftstrom mit Hilfe der zueinander entgegengesetzt verschwenkten Lamellen aufgefächert werden, so dass ein divergierender Luftstrom erzeugt wird, in welchem geringere Strömungsgeschwindigkeiten herrschen als bei einem Luftstrom mit konstantem Querschnitt, so dass auch bei einem hohen Luftdurchsatz verhindert werden kann, dass der austretende Luftstrom mit hohen Geschwindigkeiten auf einen Fahrzeuginsassen auftrifft. Ein derartiger Luftausströmer lässt jedoch noch Wünsche offen.

Die DE 37 36 448 A1 offenbart einen Luftausströmer nach dem Oberbegriff von Anspruch 1.

Es ist Aufgabe der Erfindung, einen verbesserten Luftausströmer und ein zugehöriges Luftausströmverfahren zur Verfügung zu stellen.
Diese Aufgabe wird gelöst durch einen Luftausströmer mit den Merkmalen des Patentanspruchs 1 und durch ein Luftausströmverfahren mit den Merkmalen des Patentanspruchs 14. Die abhängigen Patentansprüche betreffen vorteilhafte Aus- und Weiterbildungen der Erfindung.
Der Hauptgedanke der Erfindung besteht darin, eine Ausströmcharakteristik eines Luftausströmers durch einen einstellbaren Drall bei mindestens einem ausströmenden Luftstrom zu verändern. Erfindungsgemäß kann die Ausströmcharakteristik zwischen einer Streucharakteristik und einer Spotcharakteristik verändert werden. Der einstellbare Drall kann dabei zwischen einem maximalen Wert bei der Streucharakteristik und einem minimalen Wert bei der Spotcharakteristik eingestellt werden.
Abhängig von einer realisierten Ausführungsform der Erfindung, kann der Drall durch Veränderung einer Luftführung und/oder einer Luftmenge und/oder einer Luftgeschwindigkeit und/oder einer Ausströmungsrichtung des mindestens einen ausströmenden Luftstroms eingestellt werden.
Bei einer vorteilhaften Ausführungsform des erfindungsgemäßen Luftausströmers ist mindestens eine Dosiervorrichtung vorhanden, mit denen zur Erzeugung des Dralls die Luftführung und/oder die Luftmenge und/oder die Luftgeschwindigkeit und/oder die Ausströmungsrichtung des mindestens einen ausströmenden Luftstroms verändert werden.

Bei der erfindungsgemäßen Ausführungsform der Erfindung wird zur Einstellung des Dralls der zugeführte Luftstrom in mindestens zwei Teilluftströme aufgeteilt, wobei ein erster Teilluftstrom ein drallfreier Kernluftstrom und ein zweiter Teilluftstrom ein mit einem einstellbaren Drall beaufschlagter Mantelluftstrom ist, wobei der Kernluftstrom durch den Mantelluftstrom oder der Mantelluftstrom durch den Kernluftstrom beeinflussbar ist.

Bei einer weiteren Weiterbildung der Erfindung kann der erste und/oder der zweite Teilluftstrom aus mehreren Unterluftströmen gebildet sein.

Bei einer vorteilhaften Ausführungsform der Erfindung ist bei einer reinen Streucharakteristik nur der zweite Teilluftstrom und bei einer reinen Spotcharakteristik nur der erste Teilluftstrom aktiviert.

Zur Erzielung der verschiedenen Ausströmcharakteristika wird der Mantelluftstrom mit dem variablen Drall dem Kernluftstrom aufgeprägt, wodurch in vorteilhafterweise der Kernluftstrom destabilisiert und aufgefächert wird.

Bei einer besonders vorteilhaften Ausführungsform des erfindungsgemäßen Luftausströmers, ist die Luftleitvorrichtung derart ausgebildet ist, dass im Ausströmbereich der Luftleitvorrichtung ein mittlerer Bereich und ein äußerer Bereich vorhanden ist, wobei der mittlere Bereich den ersten Teilluftstrom (Kernluftstrom) und der äußere Bereich den zweiten Teilluftstrom (Mantelluftstrom) erzeugt. Zu diesem Zweck kann die Luftleitvorrichtung einen wendelförmigen oder in die Länge gezogenen, spiralförmigen Bereich zur Erzeugung des zweiten Teilluftstroms (Mantelluftstroms) aufweisen.

Bei einer Weiterbildung dieser besonders vorteilhaften Ausführungsform ist die Dosiervorrichtung derart ausgebildet, dass die einzelnen Teilluftstrommengen und ein Massenstromverhältnis des ersten zum zweiten Teilluftstrom steuerbar sind, wobei die Dosiervorrichtung sowohl die Verteilung des mindestens einen zugeführten Luftstroms auf die einzelnen Teilkanäle als auch deren Dosierung steuern kann.

Bei einer vorteilhaften Ausführungsform der Erfindung ist die Dosiervorrichtung im Bereich der Luftleiteinrichtung angeordnet, wobei die Dosiervorrichtung beispielsweise eine Stellvorrichtung umfasst, die eine mittels einer Kurvenscheibe oder einer Kinematik gesteuerte Doppelklappe umfasst, wobei die Stellvorrichtung direkt über eine Welle mit einem Betätigungsorgan verbunden sein kann.
Bei einer anderen vorteilhaften Ausführungsform der Erfindung ist die Dosiervorrichtung als Teil eines Klimagerätes ausgeführt, so dass die dosierten einzelnen Teilluftstrommengen über entsprechende Luftkanäle zu der Luftleitvorrichtung geführt werden.
Nachfolgend wird die Erfindung anhand der Zeichnung näher erläutert. Es zeigen:
- Fig. 1: eine Darstellung von möglichen Ausströmcharakteristika einer Ausführungsform;
- Fig. 2: eine Darstellung von möglichen Ausströmcharakteristika einer Ausführungsform der Erfindung;
- Fig. 3: schematische Darstellung einer Luftführung mit Luftausströmer für ein Kraftfahrzeug;
- Fig. 4a: eine schematische Darstellung eines ersten Ausführungsbeispiels mit Ausströmcharakteristik;
- Fig. 4b: eine schematische Darstellung von einzelnen Komponenten des ersten Ausführungsbeispiels;
- Fig. 5a bis 5d: Darstellungen einer Dosiereinrichtung und einer Luftleiteinrichtung des ersten Ausführungsbeispiels bei unterschiedlichen eingestellten Ausströmcharakteristika;
- Fig. 6a: eine schematische Darstellung eines Ausführungsbeispiels der Erfindung mit Ausströmcharakteristik;
- Fig. 6b: eine schematische Darstellung der Luftführung innerhalb der Luftleiteinrichtung des zweiten Ausführungsbeispiels;
- Fig. 6c: eine schematische Darstellung von einzelnen Komponenten des Ausführungsbeispiels, gemäß der Erfindung;
- Fig. 7a: eine schematische Darstellung der Luftleiteinrichtung des Ausführungsbeispiels gemäß der Erfindung;
- Fig. 7b: eine schematische Darstellung der Dosiereinrichtung des Ausführungsbeispiels gemäß der Erfindung;
- Fig. 8: eine schematische Darstellung eines weiteren Ausführungsbeispiels für eine Luftleiteinrichtung;
- Fig. 9: eine Darstellung eines Fahrzeuginnenraums mit den erfindungsgemäßen Luftausströmern.

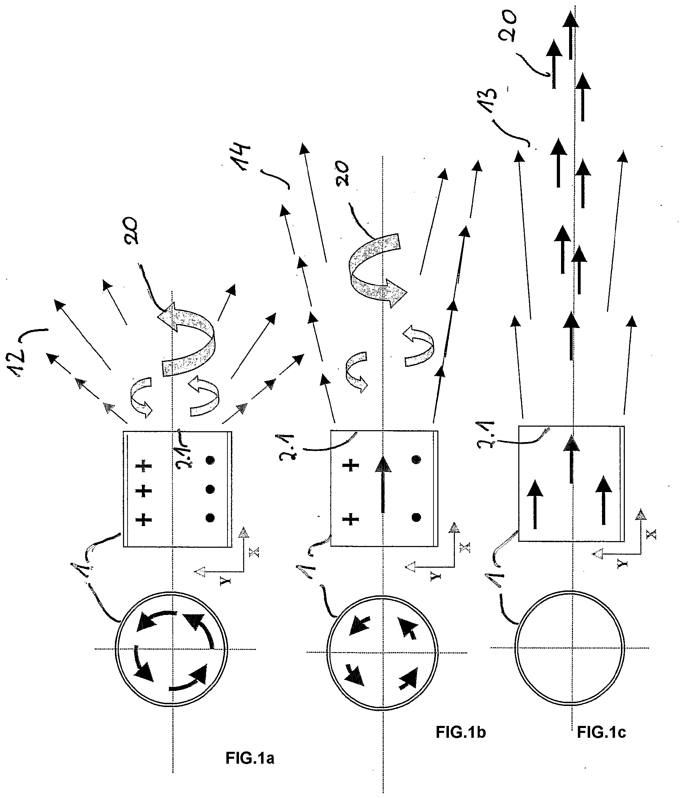

Fig. 1 zeigt Darstellungen von möglichen Ausströmcharakteristika einer ersten Ausführungsform, bei der ein einziger zugeführter Luftstrom mit einem einstellbaren Drall beaufschlagt wird, um die Ausströmcharakteristik eines Luftausströmers 1 zu verändern.
So zeigt Fig. 1a einen Luftausströmer 1 für ein Kraftfahrzeug, bei dem der axial austretende Luftstrom 20 mit einem starken Drall beaufschlagt ist. Deshalb bildet sich vor einer Austrittsöffnung 2.1 des Luftausströmer 1 ein Ausströmbereich 12 mit einer Streucharakteristik aus, d.h. der aus dem Luftausströmer 1 austretende Luftstrom 20 ist stark aufgefächert und es erfolgt nur eine schwache Verteilung in X-Richtung.

Fig. 1b zeigt einen Luftausströmer 1 für ein Kraftfahrzeug, bei dem der axial austretende Luftstrom 20 mit einem Drall beaufschlagt ist. Deshalb bildet sich vor der Austrittsöffnung 2.1 des Luftausströmer 1 ein Ausströmbereich 14 mit einer Mischcharakteristik 12 aus, d.h. der aus dem Luftausströmer austretende Luftstrom 20 ist weniger stark aufgefächert als bei der Streucharakteristik und es erfolgt eine mittlere Verteilung in X-Richtung.
Fig. 1c zeigt einen Luftausströmer 1 für ein Kraftfahrzeug, bei dem der axial austretende Luftstrom 20 nicht mit einem Drall beaufschlagt ist. Deshalb bildet sich vor der Austrittsöffnung 2.1 des Luftausströmer 1 ein Ausströmbereich 13 mit einer Spottcharakteristik aus, d.h. der aus dem Luftausströmer austretende Luftstrom 20 ist so gut wie gar nicht aufgefächert und es erfolgt eine starke Verteilung in X-Richtung.

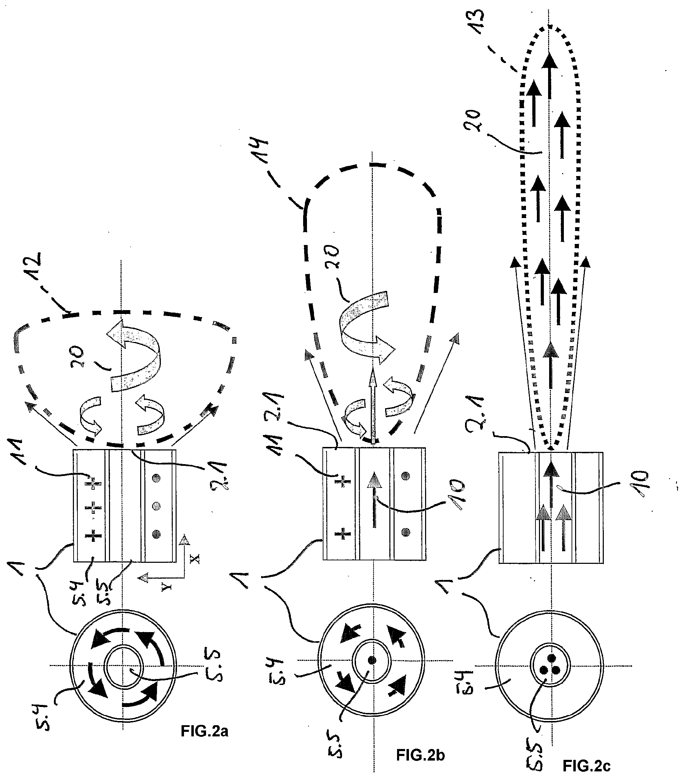

Fig. 2 zeigt Darstellungen von möglichen Ausströmcharakteristika einer zweiten Ausführungsform, gemäß der Erfindung, bei der ein einziger zugeführter Luftstrom in mindestens zwei Teilluftströme 9, 10 aufgeteilt wird, wobei ein erster Teilluftstrom 10, im dargestellten Ausführungsbeispiel ein sogenannter Kernluftstrom 10 ohne Drall zur Austrittsöffnung 2.1 geführt wird und ein zweiter Teilluftstrom 9, im dargestellten Ausführungsbeispiel als mit einem einstellbaren Drall beaufschlagter sogenannter Mantelluftstrom 11 zur Austrittsöffnung 2.1 geführt wird. Der Kernluftstrom 10 wird in einem Kernkanal 5.5 und der Mantelluftstrom 11 in einem Mantelkanal 5.4 des Luftausströmers 1 geführt. 10. Durch die Aufteilung des zugeführten Luftstroms 8 in mehrere Teilluftströme können die beschriebenen Ausströmcharakteristika besser ausgeprägt und gesteuert werden., wobei eine Aufteilung insbesondere in zwei Teilluftströme einfach zu realisieren ist.
So zeigt Fig. 2a den Luftausströmer 1, bei dem nur der mit einem Drall beaufschlagte Mantelluftstrom 11 zur Austrittsöffnung 2.1 geführt wird. Deshalb bildet sich vor der Austrittsöffnung 2.1 des Luftausströmer 1 der Ausströmbereich 12 mit einer Streucharakteristik aus, d.h. der aus dem Luftausströmer 1 austretende Luftstrom 20 ist stark aufgefächert und es erfolgt nur eine schwache Verteilung in X-Richtung. Dieser Ausströmbereich wird auch als Streubereich oder als diffuser Bereich bezeichnet.

Fig. 2c zeigt den Luftausströmer 1 für ein Kraftfahrzeug, bei dem nur der Kernluftstrom 10 zur Austrittsöffnung 2.1 geführt wird. Deshalb bildet sich vor der Austrittsöffnung 2.1 des Luftausströmer 1 ein Ausströmbereich 13 mit einer Spottcharakteristik aus, d.h. der aus dem Luftausströmer 1 austretende Luftstrom 20 ist so gut wie gar nicht aufgefächert und es erfolgt eine starke Verteilung in X-Richtung. Der Ausströmbereich 13 wird auch als Spottbereich bezeichnet.

Fig. 2b zeigt den Luftausströmer 1 für ein Kraftfahrzeug, bei dem sowohl der Kernluftstrom 10 als auch der mit einem Drall beaufschlagte Mantelluftstrom zur Austrittsöffnung 2.1 geführt wird. Die beiden Luftströme 10, 11 beeinflussen sich gegenseitig und es ergibt sich ein dritter Bereich 14 in dem sich die beiden Luftströme 10, 11 verteilen, wobei die Form des dritten Bereiches 14 vom Anteil der beiden Luftströme an einer augenblicklichen Luftverteilung abhängig ist. In anderen Worten ausgedrückt, der Kernluftstrom 10 wird abhängig von der Massenstromaufteilung zwischen dem Kernluftstrom 10 und dem Mantelluftstrom 11 durch den vom Mantelluftstrom 11 aufgeprägten Drall destabilisiert und entsprechend aufgefächert, bzw. der mit dem Drall beaufschlagte Mantelluftstrom 11 wird abhängig von der Massenstromaufteilung durch den Kernluftstrom 10 weiter in X-Richtung transportiert, wodurch die Auffächerung durch den Drall erst in größerer Entfernung von der Ausströmöffnung 2.1 wirksam wird. Somit läßt sich in Abhängigkeit von der Massenstromaufteilung jede mögliche Luftverteilung bzw. Ausströmcharakteristik zwischen den beiden Extremwerten nur Mantelluftstrom 11 und Streucharakteristik oder nur Kernluftstrom 10 und Spottcharakteristik realisieren.

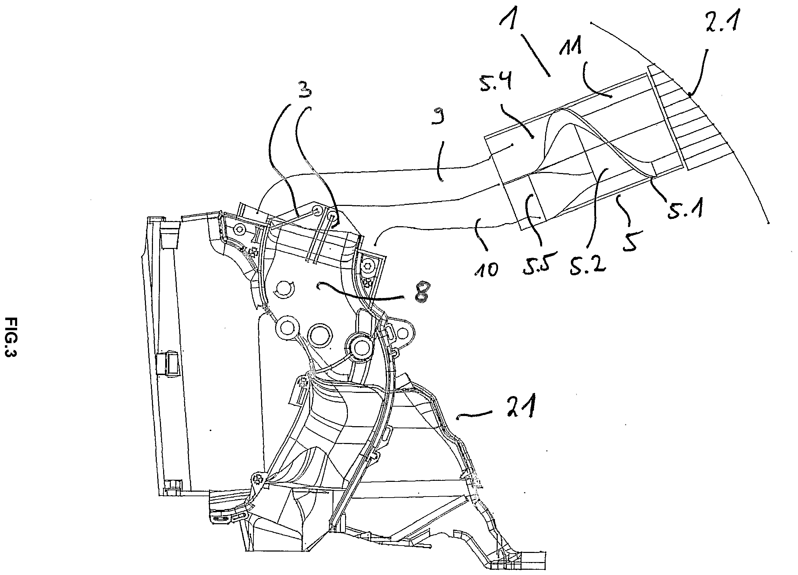

Fig. 3 zeigt eine schematische Darstellung einer Luftführung mit einem erfindungsgemäßen Luftausströmer 1 in einem Kraftfahrzeug. Der Luftausströmer entspricht dabei der oben beschriebenen zweiten Ausführungsform, d.h. ein erster Teilluftstrom 10 wird über den Kernkanal 5.5 zur Austrittsöffnung 2.1 geführt und ein zweiter Teilluftstrom 9 wird im Mantelkanal 5.4 durch entsprechende Luftleitelemente 5.1 mit einem Drall beaufschlagt und als mit einem Drall beaufschlagter Mantelluftstrom 11 zur Austrittsöffnung 2.1 geführt. Die Luftaufteilung des zugeführten Luftstroms 8 wird dabei durch eine in einem Klimagerät 21 angeordnete Dosiereinrichtung eingestellt, die im dargestellten Ausführungsbeispiel durch zwei Klappen mit zugehörigen Ansteuerungsmitteln realisiert ist.

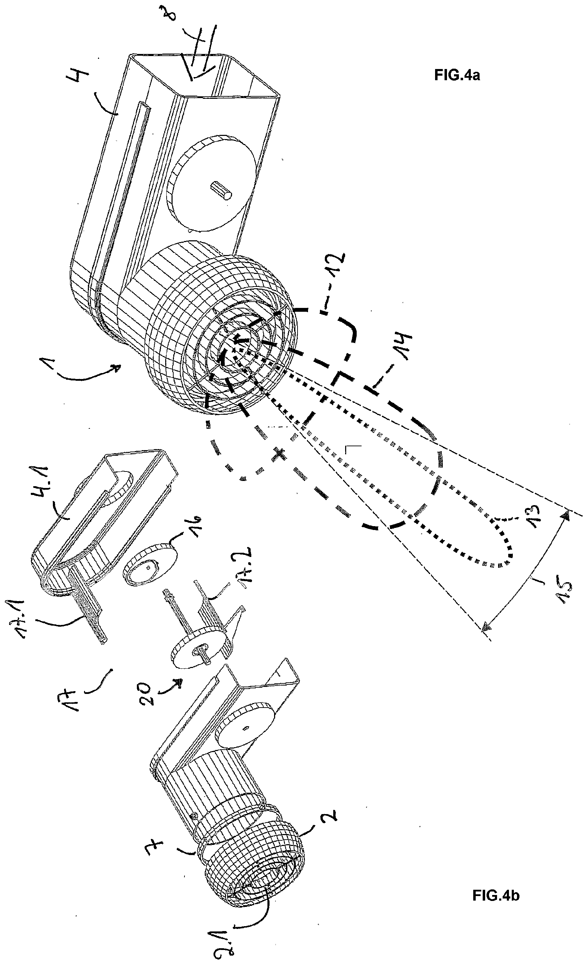

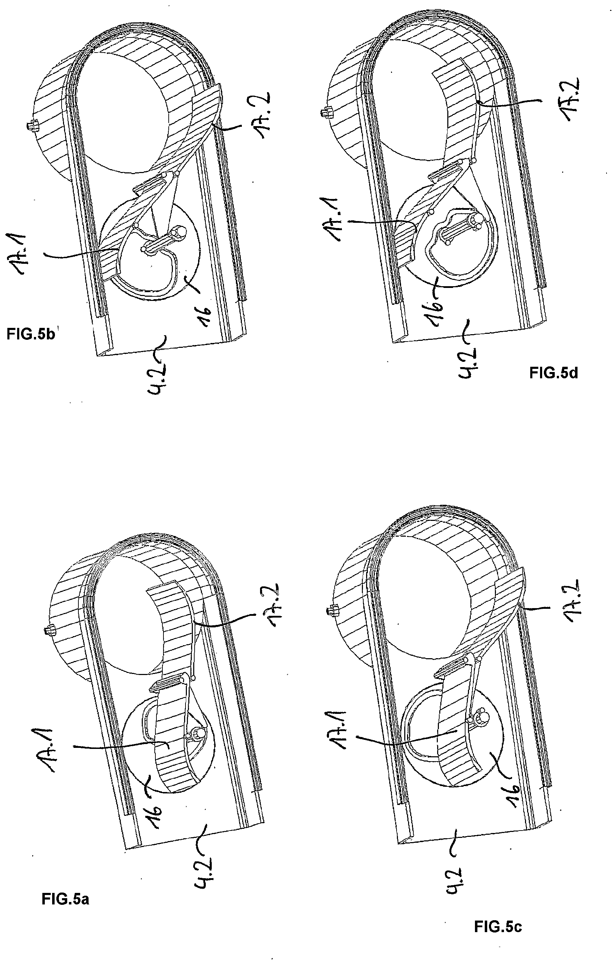

Fig. 4 zeigt eine mögliche Ausführungsform des ersten Ausführungsbeispiels der Erfindung. So zeigt Fig. 4a eine schematische Darstellung des ersten Ausführungsbeispiels der Erfindung mit verschiedenen Ausströmcharakteristika und Fig. 4b eine schematische Darstellung von einzelnen Komponenten des ersten Ausführungsbeispiels. Wie aus Fig. 4a und 4b ersichtlich ist, schließt sich der Luftausströmer 1 beim ersten Ausführungsbeispiel an einen Luftkanal 4 an, der einen Luftstrom 8 zuführt. Der Luftausströmer 1 umfaßt eine schon im Luftkanal 4 angeordnete Dosier/Luftverteilvorrichtung 17. Die Dosier/Luftverteilvorrichtung 17 umfaßt eine zweiteilige Luftleitschaufel 17.1, 17.2 und eine Kurvenscheibe 16 mit zugehörigem Antrieb 20, wobei die Luftleitschaufel eine obere 17.1 und eine untere 17.2 Schaufel umfaßt. An die Dosier/Luftverteilvorrichtung 17 schließt sich ein Schwenkring 7 und eine verschwenkbare Blende 2 mit der Ausströmöffnung 2.1 zum Einstellen der Ausströmrichtung innerhalb eines Schwenkbereichs 15 an. Mit dem Luftausströmer 1 werden die bereits beschriebenen ersten, zweiten und dritten Bereiche 12, 13, 14 der Luftverteilung vor der Ausströmöffnung 2.1 und die damit verbundene Ausströmcharakteristika erreicht, wie nachfolgend anhand der Fig. 5a bis Fig. 5d erläutert wird.

Fig. 5 zeigt den Luftkanal 4 mit abgenommenen Luftkanaloberteil 4.1 und die darin angeordnete Dosier/Luftverteilvorrichtung 17 mit unterschiedlichen Stellungen der beiden Schaufeln 17.1, 17.2 zur Erzielung der unterschiedlichen Ausströmcharakteristika.

Fig. 5a zeigt die beiden Schaufeln 17.1, 17.2 in einer Mittelstellung zur Erzielung der Ausströmcharakteristik des dritten in Fig. 1b dargestellten Bereichs 14, bei dem der axial austretende Luftstrom mit einem Drall beaufschlagt ist, wobei die Spottcharakteristik durch Absenken der unteren Schaufel 17.2 in Richtung untere Luftkanalwand vergrößert wird, und wobei die Streucharakteristik durch Anheben der oberen Schaufel 17.1 in Richtung oberer Luftkanalwand vergrößert wird.

Fig. 5b zeigt die Stellung der beiden Schaufeln 17.1, 17.2 in einer Schließstellung des Luftausströmers 1 bei der kein Luftstrom an der Austrittsöffnung 2.1 austritt, d.h. die beiden Schaufeln 17.1, 17.2 sperren die gesamten Querschnittsfläche des Luftkanals 4, wobei die obere Schaufel 17.1 an einer oberen Wand und die untere Schaufel 17.2 an einer unteren Wand des Luftkanals 4 dichtend anliegt.

Fig. 5c zeigt eine Stellung der Schaufeln 17.1, 17.2 mit der die Spottausströmcharakteristik des in Fig. 1c dargestellten zweiten Bereichs 13 erzielt wird. Die obere Schaufel 17.1 befindet sich dabei in einer nahezu waagerechten Stellung, während die untere Schaufel 17.2 den unteren Bereich des Luftkanals 4 schließt, so dass der Luftstrom auf der Oberseite der Schaufeln 17.1, 17.2 nahezu ohne Drall zur Ausströmöffnung 2.1 geführt wird.

Fig. 5d zeigt eine Stellung der Schaufeln 17.1, 17.2 mit der die Streuausströmcharakteristik des in Fig. 1a dargestellten ersten Bereichs 12 erzielt wird. Die untere Schaufel 17.2 befindet sich dabei in einer nahezu waagerechten Stellung, während die obere Schaufel 17.1 den oberen Bereich des Luftkanals 4 dichtend schließt, so dass der Luftstrom entlang der Unterseite der Schaufeln 17.1, 17.2 in einen Randbereich des Luftkanals 4 geführt wird, wodurch dem Luftstrom ein Drall aufgeprägt wird, mit dem der Luftstrom dann zur Ausströmöffnung 2.1 geführt wird.

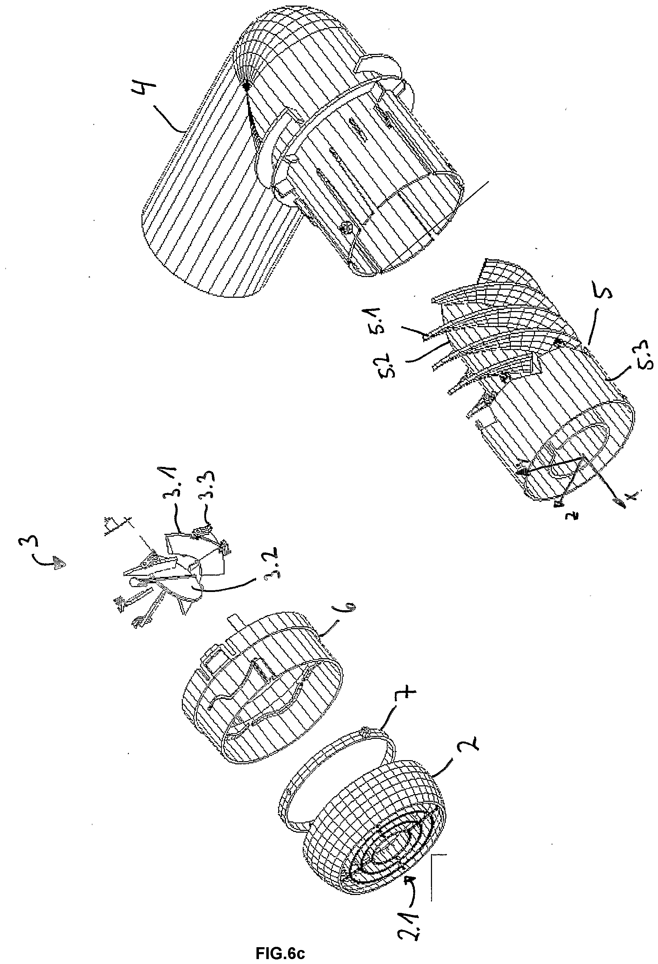

Wie aus Fig. 6c ersichtlich ist, umfaßt das zweite Ausführungsbeispiel des erfindungsgemäßen Luftausströmers 1, eine Blende 2 mit Ausströmöffnung 2.1, eine Dosiereinrichtung 3, eine Luftleiteinrichtung 5, einen Betätigungsring 6 und einen Schwenkring 7, wobei der Luftausströmer 1 sich an einen Luftkanal 4 anschließt.

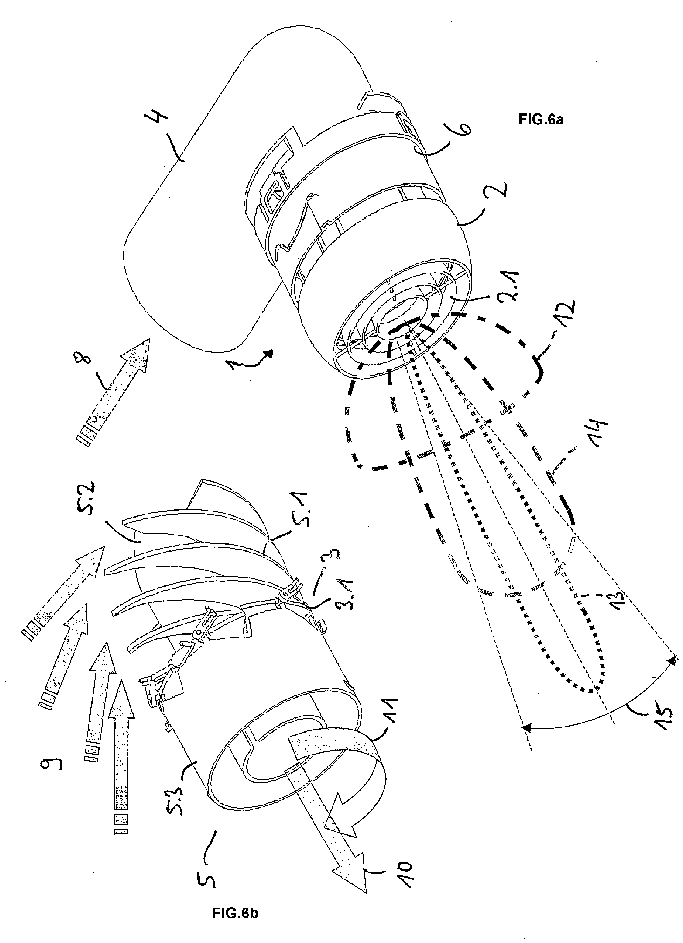

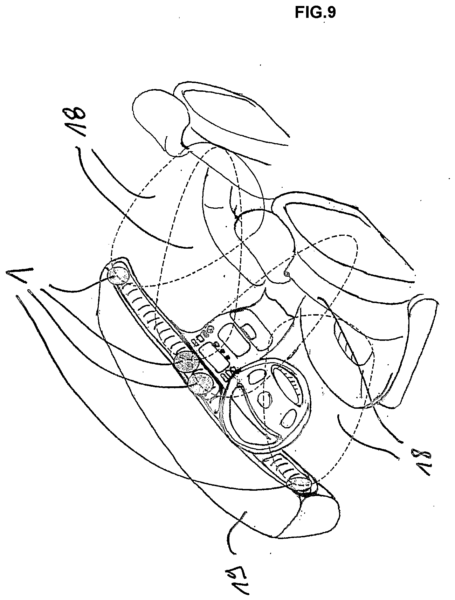

So zeigt Fig. 6a einen vollständig zusammengebauten Luftausströmer 1, bei dem die Luftleiteinrichtung 5 in den Luftkanal 4 eingeschoben ist, wobei die Dosiereinrichtung 3 im Bereich der Luftleiteinrichtung 5 angeordnet ist (siehe Fig. 6b), wobei der Betätigungsring 6 zur Einstellung der Dosiereinrichtung 4 über einen vorderen Bereich 5.3 der Luftleiteinrichtung 5 geschoben wird, bis der Betätigungsring 6 in die Dosiereinrichtung 3 eingreift. Die Luftleiteinrichtung 5 teilt einen dem Luftausströmer 1 über den Luftkanal zugeführten Luftstrom 8 durch Luftleitelemente 5.1, 5.2 in zwei Teilluftströme 9 und 10 auf, wie aus Fig. 6b ersichtlich ist, wobei die Dosiereinrichtung 3 Mittel 3.2 zum Dosieren des ersten Teilluftstroms 10 und Mittel 3.1 zum Dosieren des zweiten Teilluftstroms 9 umfaßt, und wobei die Mittel zum Dosieren 3.1, 3.2 vorzugsweise einzelne Klappen bzw. Luftleitelemente umfassen, die vom Betätigungsring 6 über entsprechende an der Dosiereinrichtung 3 angeordnete Eingriffe 3.3 einstellbar sind. Dem zweiten Teilluftstrom 9 wird durch die Leitelemente 5.1 bzw. durch die Dosiereinrichtung 3 ein Drall aufgeprägt, so dass der zweite Teilluftstrom 9 als mit einem Drall beaufschlagter zweiter Teilluftstrom 11 die Luftleiteinrichtung verläßt. Das Luftleitelement 5.2 führt den ersten Teilluftstrom 10 ohne Drallaufprägung durch die Luftleiteinrichtung zu der Blende 2, die mit dem Schwenkring 7 eine Vorrichtung zur Einstellung eines Schwenkbereichs 15 des Luftausströmers 1 bildet, mit der die Richtung des Luftstroms im Bereich einer Austrittsöffnung 2.1 einstellbar ist. Die Austrittsöffnung 2.1 und somit auch die Vorrichtung 2, 7 zur Einstellung der Richtung des Luftstroms sind in einem Armaturenbrett 19 (siehe Fig. 9) eines Kraftfahrzeugs eingebaut und somit kann der Insasse direkt eine gewünschte Richtung des Luftstromes einstellen und auch die zu den einzelnen Luftausströmern 1 gehörenden Ausströmbereiche 18 variieren.

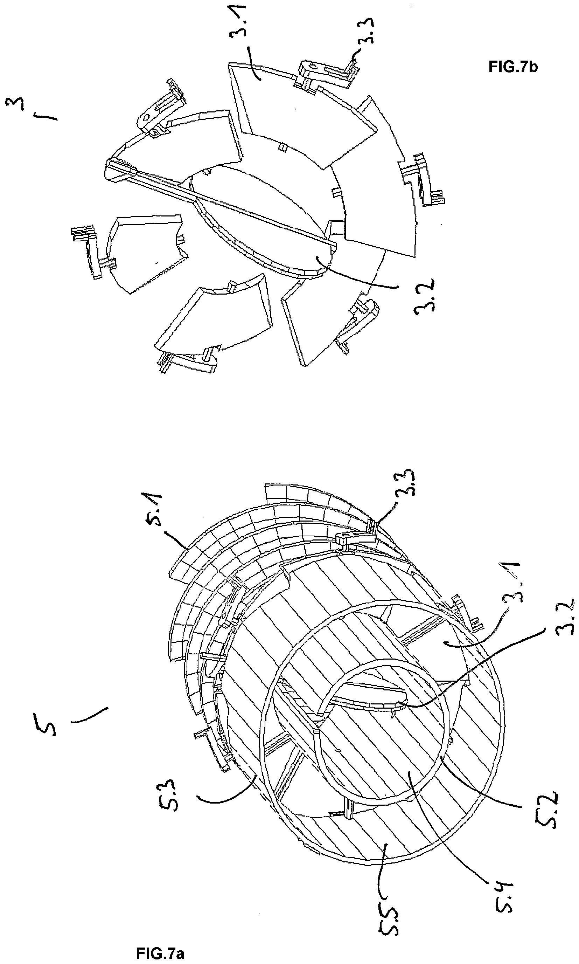

Fig. 7a und 7b zeigen die Luftleiteinrichtung 5 mit der Dosiereinrichtung 3 und die Dosiereinrichtung 3 im Detail. Wie aus Fig. 7b ersichtlich ist, umfaßt die Dosiereinrichtung 3 erste Klappen 3.1 zur Dosierung des zweiten Luftstroms 9 bzw. des Mantelluftstroms 11 und eine zweite Klappe 3.2 zur Dosierung des ersten Luftstroms 10 bzw. des Kernstroms. Zudem sind Mittel 3.3 vorhanden, die in den in Fig. 6 dargestellten Betätigungsring 6 eingreifen, damit über den Betätigungsring 6 die Klappen 3.1, 3.2 zur Dosierung der Teilluftströme 9, 10 verstellt werden können. Mit der Dosiervorrichtung 3 und/oder der Luftleitvorrichung 5 läßt sich zur Erzeugung des Dralls die Luftführung und/oder die Luftmenge und/oder die Luftgeschwindigkeit und damit die Ausströmcharakteristik des zugeführten Luftstroms 8 verändern.

Wie aus Fig. 7a ersichtlich ist, teilt die Luftleitvorrichtung 5 den zugeführten Luftstrom 8 im dargestellten Ausführungsbeispiel in zwei Teilluftströme auf. Die Aufteilung erfolgt in radialer Richtung, so dass in einem mittleren Bereich 5.4 der Luftleitvorrichtung 5 der Kernluftstrom in einem Kernkanal 5.4 in axialer Richtung zur Ausströmöffnung 2.1 geführt wird und in einem äußeren Bereich 5.5 der mit einem Drall beaufschlagte Mantelluftstrom 11 in einem Mantelkanal 5.5 zur Ausströmöffnung 2.1 geführt wird. Der zweite Teilluftstrom 9 wird durch die Luftleitelemente 5.1 wendelförmig um den mittleren Kernkanal 5.4 geführt und erhält entsprechend der Ausrichtung der Luftleitelemente 5.1 einen Drall, im oder entgegen dem Uhrzeigersinn, wie in den Figuren durch entsprechende Pfeile im Bereich des Luftaustritts angedeutet ist. Im Gegensatz zum dargestellten Ausführungsbeispiel ist es aber auch vorstellbar den im mittleren Bereich 5.4 geführten Kernluftstrom 10 durch geeignete Luftleitelemente mit einem Drall zu beaufschlagen und zur Ausströmöffnung 2.1 zu führen und den im äußeren Bereich geführten Mantelluftstrom 11 im Wesentlichen ohne Drall zur Ausströmöffnung 2.1 zu führen.

Wie aus den Fig. 6b und 7a ersichtlich ist, können die Teilluftströme nochmals in Unterluftströme aufgeteilt sein, was im dargestellten ersten Ausführungsbeispiel für den zweiten Teilluftstrom 9 zutrifft. Dort bilden die einzelnen Luftleitelemente 5.1 mehrere Untermantelkanäle, deren Strömungsquerschnitte durch entsprechende Klappen 3.1 in der Dosiereinrichtung 3 einzeln oder gemeinsam verändert werden können. Die einzelnen Unterkanäle werden im vorderen Bereich der Luftleitvorrichtung 5.3 wieder zu einem Mantelkanal 5.5 vereinigt, in dem der mit einem Drall beaufschlagte Mantelluftstrom 11 zur Ausströmöffnung 2.1 geführt wird.

Die Einstellung der Dosiereinrichtung 3 erfolgt direkt durch den Insassen über ein am Armaturenbrett 19 angeordnetes Betätigungsorgan oder automatisch von einer Steuer/Regeleinheit gemäß einem vom Benutzer gewählten Belüftungs- und/oder Klimatisierungsprogramm.

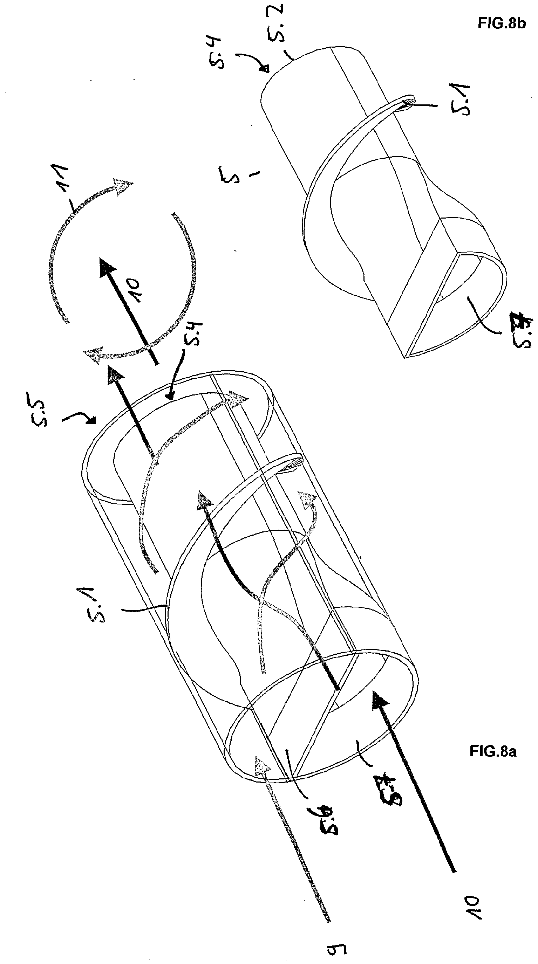

Fig. 8 zeigt die in Fig. 3 dargestellte Luftleitvorrichtung 5 im Detail. Wie bereits ausgeführt, erfolgt die Dosierung und die Aufteilung des Luftstroms 8 schon im Klimagerät 21. Wie aus Fig. 8a werden über entsprechende Luftkanäle der Luftleitvorrichtung 5 der erste Teilluftstrom 10 und der zweite Teilluftstrom 9 zugeführt. Die erste Teilluftstrom 10 tritt in einen unteren Bereich 5.7 in die Luftleitvorrichtung 5 ein und verläßt als Kernluftstrom in einem Kernkanal 5.4 die Ausströmöffnung 2.1. Der zweite Teilluftstrom 9 tritt in einem oberen Bereich 5.6 in die Luftleitvorrichtung 5, wird durch ein Luftleitelement 5.1 mit einem Drall beaufschlagt und verläßt als Mantelluftstrom 11 in einem Mantelkanal 5.5 die Ausströmöffnung 2.1. Der zweite Teilluftstrom 9 wird durch die Luftleitelemente 5.1 wendelförmig um den mittleren Kernkanal 5.4 geführt und erhält entsprechend der Ausrichtung der Luftleitelemente 5.1 einen Drall, im oder entgegen dem Uhrzeigersinn, wie in den Figuren durch entsprechende Pfeile im Bereich des Luftaustritts angedeutet ist. Im Gegensatz zum dargestellten Ausführungsbeispiel ist es aber auch vorstellbar den Kernluftstrom 10 durch geeignete Luftleitelemente mit einem Drall zu beaufschlagen und zur Ausströmöffnung 2.1 zu führen und den Mantelluftstrom 11 im Wesentlichen ohne Drall zur Ausströmöffnung 2.1 zu führen.

## Patentansprüche

1. Luftausströmer, insbesondere für ein Kraftfahrzeug, mit mindestens einem zugeführten Luftstrom (8), wobei eine Ausströmcharakteristik des Luftausströmers (5) zwischen einer Streucharakteristik (12) und einer Spotcharakteristik (13) veränderbar ist, wobei die Ausströmcharakteristik durch einen einstellbaren Drall bei mindestens einem ausströmenden Luftstrom (20) verändert wird, wobei zur Einstellung des Dralls der zugeführte Luftstrom (8) in mindestens zwei Teilluftströme (9, 10) aufgeteilt ist und ein erster Teilluftstrom (10) ein drallfreier Kernluftstrom (10) und ein zweiter Teilluftstrom (9) ein mit einem einstellbaren Drall beaufschlagter Mantelluftstrom (11) ist und der Kernluftstrom (10) durch den Mantelluftstrom (11) oder der Mantelluftstrom (11) durch den Kernluftstrom (10) beeinflußbar ist, wobei der Drall durch Veränderung einer Luftführung und/oder einer Luftmenge und/oder einer Luftgeschwindigkeit und/oder einer Ausströmungsrichtung des mindestens einen ausströmenden Luftstroms (20) einstellbar ist, mit mindestens einer Luftleitvorrichung (5, 17), mit welcher zur Erzeugung des Dralls die Luftführung und/oder die Luftmenge und/oder die Luftgeschwindigkeit und/oder die Ausströmungsrichtung des ausströmenden Luftstroms (20) veränderbar ist, **dadurch gekennzeichnet, dass** die Luftleitvorrichtung (5) einen wendelförmigen oder in die Länge gezogenen, spiralförmigen Bereich zur Erzeugung des zweiten Luftstroms (11) aufweist.

2. Luftausströmer nach Anspruch 1, **dadurch gekennzeichnet, dass** der Drall des mindestens einen Luftstromes (20) zwischen einem maximalen Wert bei der Streucharakteristik (12) und einem minimalen Wert bei der Spotcharakteristik (13) einstellbar ist.

3. Luftausströmer nach Anspruch 1 oder 2, **gekennzeichnet durch** mindestens eine Dosiervorrichtung (3, 17), mit welcher zur Erzeugung des Dralls die Luftführung und/oder die Luftmenge und/oder die Luftgeschwindigkeit und/oder die Ausströmungsrichtung des ausströmenden Luftstroms (20) veränderbar ist.

4. Luftausströmer nach einem der vorhergehenden Ansprüche, **dadurch gekennzeichnet, dass** der erste und/oder der zweite Teilluftstrom (9, 10) aus mehreren Unterluftströmen gebildet wird.

5. Luftausströmer nach einem der vorhergehenden Ansprüche, **dadurch gekennzeichnet, dass** bei der Streucharakteristik (12) nur der zweite Teilluftstrom (9) aktiviert ist.

6. Luftausströmer nach einem der vorhergehenden Ansprüche, **dadurch gekennzeichnet, dass** bei der Spotcharakteristik (13) nur der erste Teilluftstrom (10) aktiviert ist.

7. Luftausströmer nach einem der vorhergehenden Ansprüche, **dadurch gekennzeichnet, dass** der zweite Teilluftstrom (11) dem ersten Teilluftstrom (10) mit einem variablen Drall aufgeprägt wird, wodurch der erste Teilluftstrom (10) destabilisiert und aufgefächert wird.

8. Luftausströmer nach einem der vorhergehenden Ansprüche, **dadurch gekennzeichnet, dass** die Luftleitvorrichtung (5) derart ausgebildet ist, dass im Ausströmbereich der Luftleitvorrichtung (5) ein mittlerer Bereich (5.4) und ein äußerer Bereich (5.5) vorgesehen ist, wobei der mittlere Bereich (5.4) den ersten Teilluftstrom (9, 11) erzeugt, und wobei der äußere Bereich (5.5) den zweiten Teilluftstrom (10) erzeugt.

9. Luftausströmer nach einem der Ansprüche 3 bis 8, **dadurch gekennzeichnet, dass** die Dosiervorrichtung (3) derart ausgebildet ist, dass die einzelnen Teilluftstrommengen und ein Massenstromverhältnis des ersten zum zweiten Teilluftstrom (9, 10) steuerbar sind.

10. Luftausströmer nach einem der Ansprüche 3 bis 9, **dadurch gekennzeichnet, dass** die Dosiervorrichtung (3, 17) sowohl die Aufteilung des mindestens einen zugeführten Luftstroms (9) auf die einzelnen Teilkanäle (5.4, 5.5) als auch deren Dosierung steuert.

11. Luftausströmer nach einem der Ansprüche 3 bis 10, **dadurch gekennzeichnet, dass** als Dosiervorrichtung (3) eine Stellvorrichtung (17) vorgesehen ist, die eine mittels einer Kurvenscheibe (16) oder einer Kinematik gesteuerte Doppelklappe (17.1, 17.2) aufweist.

12. Luftausströmer nach Anspruch 11, **dadurch gekennzeichnet, dass** die Stellvorrichtung (17) direkt über eine Welle mit einem Betätigungsorgan verbunden ist.

13. Luftausströmer nach einem der vorhergehenden Ansprüche, **dadurch gekennzeichnet, dass** Mittel zum Einstellen (3, 17) des mindestens einen ausströmenden Luftstroms (20) und/oder von mindestens einem Teilluftstrom (9, 10) im Klimagerät (21) angeordnet sind.

14. Luftausströmungsverfahren für einen Luftausströmer (1) gemäß einem der vorhergehenden Ansprüche, in einem Kraftfahrzeug, mit mindestens einem zugeführten Luftstrom (8), wobei eine Ausströmcharakteristik des Luftausströmers (1) durch einen einstellbaren Drall bei mindestens einem ausströmenden Luftstrom (20) verändert wird, wobei die Ausströmcharakteristik zwischen einer Streucharakteristik (12) und einer Spotcharakteristik (13) veränderbar ist, wobei zur Einstellung des Dralls der zugeführte Luftstrom (8) in mindestens zwei Teilluftströme (9, 10) aufgeteilt wird und ein erster Teilluftstrom (10) ein drallfreier Kernluftstrom (10) und ein zweiter Teilluftstrom (9) ein mit einem einstellbaren Drall beaufschlagter Mantelluftstrom (11) ist und der Kernluftstrom (10) durch den Mantelluftstrom (11) oder der Mantelluftstrom (11) durch den Kernluftstrom (10) beeinflusst wird, **dadurch gekennzeichnet, dass** die Luftleitvorrichtung (5) einen wendelförmigen oder in die Länge gezogenen, spiralförmigen Bereich zur Erzeugung des zweiten Luftstroms (11) aufweist.

15. Luftausströmungsverfahren nach Anspruch 14, **dadurch gekennzeichnet, dass** der Drall des mindestens einen Luftstromes (20) zwischen einem maximalen Wert bei der Streucharakteristik (12) und einem minimalen Wert bei der Spotcharakteristik (13) eingestellt wird.

16. Luftausströmungsverfahren nach Anspruch 14 oder 15, **dadurch gekennzeichnet, dass** der Drall durch Veränderung einer Luftführung und/oder einer Luftmenge und/oder einer Luftgeschwindigkeit und/oder einer Ausströmungsrichtung des mindestens einen ausströmenden Luftstroms (20) eingestellt wird.

17. Luftausströmungsverfahren nach Anspruch 16, **dadurch gekennzeichnet, dass** der mindestens eine zugeführte Luftstrom (8) durch mindestens eine Dosiervorrichtung (3, 17) und/oder mindestens eine Luftleitvorrichung (5, 17) eingestellt wird, mit denen zur Erzeugung des Dralls die Luftführung und/oder die Luftmenge und/oder die Luftgeschwindigkeit und/oder die Ausströmungsrichtung des ausströmenden Luftstroms (20) verändert werden.

18. Luftausströmungsverfahren nach einem der Ansprüche 14 bis 17, **dadurch gekennzeichnet, dass** der erste und/oder der zweite Teilluftstrom (9, 10) aus mehreren Unterluftströmen gebildet wird.

19. Luftausströmungsverfahren nach einem der Ansprüche 14 bis 18, **dadurch gekennzeichnet, dass** zur Einstellung der reinen Streucharakteristik (12) nur der zweite Teilluftstrom (11) aktiviert wird.

20. Luftausströmungsverfahren nach einem der Ansprüche 14 bis 18, **dadurch gekennzeichnet, dass** zur Einstellung der reinen Spotcharakteristik (13) nur der erste Teilluftstrom (10) aktiviert wird.

21. Luftausströmungsverfahren nach einem der Ansprüche 14 bis 18, **dadurch gekennzeichnet, dass** der zweite Teilluftstrom (9) dem ersten Teilluftstrom (10) mit einem variablen Drall aufgeprägt wird, wodurch der erste Teilluftstrom (10) destabilisiert und aufgefächert wird.

22. Luftausströmungsverfahren nach einem der Ansprüche 14 bis 21, **dadurch gekennzeichnet, dass** die einzelnen Teilluftstrommengen und ein Massenstromverhältnis des ersten zum zweiten Teilluftstrom mit einer Dosiervorrichtung (3) gesteuert wird.

23. Luftausströmungsverfahren nach einem der Ansprüche 14 bis 22, **dadurch gekennzeichnet, dass** eine Verteilung des mindestens einen zugeführten Luftstroms (8) auf die einzelnen Teilkanäle (5.4, 5.5) als auch deren Dosierung mit der Dosiervorrichtung (3) gesteuert wird.

24. Klimaanlage für ein Kraftfahrzeug mit mindestens einem Luftausströmer nach einem der Ansprüche 1 bis 13.

## Claims

1. An air outflow device, in particular for a motor vehicle, having at least one fed-in air stream (8), wherein an outflow characteristic of the air outflow device (5) is changeable between a dispersal characteristic (12) and a spot characteristic (13), wherein the outflow characteristic is changed by an adjustable swirl on at least one outflowing air stream (20), wherein the fed-in air stream (8) is divided into at least two partial air streams (9, 10) in order to adjust the swirl and a first partial air stream (10) is a swirl-free core air stream (10) and a second partial air stream (9) is an outer air stream (11) to which an adjustable swirl is applied and the core air stream (10) can be influenced by the outer air stream (11) or the outer air stream (11) can be influenced by the core air stream (10), wherein the swirl is adjustable by changing the directing of the air and/or a quantity of air and/or an air speed and/or an outflow direction of the at least one outflowing air stream (20), with at least one air directing device (5, 17) with which the directing of the air and/or the quantity of air and/or the air speed and/or the outflow direction of the outflowing air stream (20) is changeable in order to generate the swirl, **characterised in that** the air directing device (5) has a helical or spiral region of extended length for generating the second air stream (11).

2. The air outflow device as claimed in claim 1, **characterised in that** the swirl of the at least one air stream (20) is adjustable between a maximum value for the dispersal characteristic (12) and a minimum value for the spot characteristic (13).

3. The air outflow device as claimed in claim 1 or 2, **characterised by** at least one metering device (3, 17) with which the directing of the air and/or the quantity of air and/or the air speed and/or the outflow direction of the outflowing air stream (20) can be changed in order to generate the swirl.

4. The air outflow device as claimed in one of the preceding claims, **characterised in that** the first and/or the second partial air stream (9, 10) is formed from a plurality of sub air streams.

5. The air outflow device as claimed in one of the preceding claims, **characterised in that** only the second partial air stream (9) is activated for the dispersal characteristic (12).

6. The air outflow device as claimed in one of the preceding claims, **characterised in that** only the first partial air stream (10) is activated for the spot characteristic (13).

7. The air outflow device as claimed in one of the preceding claims, **characterised in that** the second partial air stream (11) is impressed on the first partial air stream (10) with a variable swirl, as a result of which the first partial air stream (10) is destabilised and fanned out.

8. The air outflow device as claimed in one of the preceding claims, **characterised in that** the air directing device (5) is designed in such a way that a central region (5.4) and an outer region (5.5) are provided in the outflow region of the air directing device (5), wherein the central region (5.4) generates the first partial air stream (9, 11) and wherein the outer region (5.5) generates the second partial air stream (10).

9. The air outflow device as claimed in one of claims 3 to 8, **characterised in that** the metering device (3) is designed in such a way that the individual partial air flow quantities and a mass flow rate ratio of the first partial air stream to the second partial air stream (9, 10) can be controlled.

10. The air outflow device as claimed in one of claims 3 to 9, **characterised in that** the metering device (3, 17) controls both the splitting up of the at least one fed-in air stream (9) among the individual component ducts (5.4, 5.5) and their metering.

11. The air outflow device as claimed in one of claims 3 to 10, **characterised in that** an actuator (17) is provided as the metering device (3), having a double flap (17.1, 17.2) which is controlled by a cam disc (16) or kinematics.

12. The air outflow device as claimed in claim 11, **characterised in that** the actuator (17) is connected directly to an activation element via a shaft.

13. The air outflow device as claimed in one of the preceding claims, **characterised in that** components for adjusting (3, 17) the at least one outflowing air stream (20) and/or at least one partial air stream (9, 10) are arranged in the air conditioning unit (21).

14. An air outflow method for an air outflow device (1) as claimed in one of the preceding claims, in a motor vehicle, having at least one fed-in air stream (8), wherein an outflow characteristic of the air outflow device (1) is changed by an adjustable swirl on at least one outflowing air stream (20), wherein the outflow characteristic is changeable between a dispersal characteristic (12) and a spot characteristic (13), wherein the fed-in air stream (8) is divided into at least two partial air streams (9, 10) in order to adjust the swirl and a first partial air stream (10) is a swirl-free core air stream (10) and a second partial air stream (9) is an outer air stream (11) to which an adjustable swirl is applied and the core air stream (10) is influenced by the outer air stream (11) or the outer air stream (11) is influenced by the core air stream (10), **characterised in that** the air directing device (5) has a helical or spiral region of extended length for generating the second air stream (11).

15. The air outflow method as claimed in claim 14, **characterised in that** the swirl of the at least one air stream (20) is adjusted between a maximum value for the dispersal characteristic (12) and a minimum value for the spot characteristic (13).

16. The air outflow method as claimed in claim 14 or 15, **characterised in that** the swirl is adjusted by changing the directing of the air and/or a quantity of air and/or an air speed and/or an outflow direction of the at least one outflowing air stream (20).

17. The air outflow method as claimed in claim 16, **characterised in that** the at least one fed-in air stream (8) is adjusted by at least one metering device (3, 17) and/or at least one air directing device (5, 17) with which the directing of the air and/or the quantity of air and/or the air speed and/or the outflow direction of the outflowing air stream (20) are changed in order to generate the swirl.

18. The air outflow method as claimed in one of claims 14 to 17, **characterised in that** the first and/or the second partial air streams (9, 10) are formed from a plurality of sub air streams.

19. The air outflow method as claimed in one of claims 14 to 18, **characterised in that** only the second partial air stream (11) is activated in order to set the pure dispersal characteristic (12).

20. The air outflow method as claimed in one of claims 14 to 18, **characterised in that** only the first partial air stream (10) is activated in order to set the pure spot characteristic (13).

21. The air outflow method as claimed in one of claims 14 to 18, **characterised in that** the second partial air stream (9) is impressed on the first partial air stream (10) with a variable swirl, as a result of which the first partial air stream (10) is destabilised and fanned out.

22. The air outflow method as claimed in one of claims 14 to 21, **characterised in that** the individual partial air stream quantities and a mass flow rate ratio of the first partial air stream to the second partial air stream is controlled with a metering device (3).

23. The air outflow method as claimed in one of claims 14 to 22, **characterised in that** a distribution of the at least one fed-in air stream (8) among the individual component ducts (5.4, 5.5) as well as their metering are controlled with the metering device (3).

24. An air conditioning system for a motor vehicle having at least one air outflow device as claimed in one of claims 1 to 13.

## Revendications

1. Diffuseur d'air, en particulier pour un véhicule automobile, comprenant au moins un flux d'air fourni (8), où une caractéristique de diffusion du diffuseur d'air (5) peut être modifiée entre une caractéristique à effet dispersé (12) et une caractéristique à effet concentré (13), où la caractéristique de diffusion, dans le cas d'au moins un flux d'air (20) se diffusant, est modifiée par un tourbillon réglable, où, pour le réglage du tourbillon, le flux d'air fourni (8) est divisé en au moins deux flux d'air partiels (9, 10), et un premier flux d'air partiel (10) est un flux d'air de noyau (10) sans tourbillon, et un deuxième flux d'air partiel (9) est un flux d'air d'enveloppe (11) soumis à un tourbillon réglable, et le flux d'air de noyau (10) peut être influencé par le flux d'air d'enveloppe (11), ou bien le flux d'air d'enveloppe (11) peut être influencé par le flux d'air de noyau (10), où le tourbillon peut être réglé par une modification d'une circulation de l'air et / ou d'un débit d'air et / ou d'une vitesse de l'air et / ou d'une direction de diffusion du flux d'air (20) au moins au nombre de un se diffusant, ladite modification étant effectuée avec au moins un dispositif déflecteur d'air (5, 17) avec lequel la circulation de l'air et / ou le débit d'air et / ou la vitesse de l'air et / ou la direction de diffusion du flux d'air (20) se diffusant peut être modifié(e) pour la production du tourbillon, **caractérisé en ce que** le dispositif déflecteur d'air (5) présente, pour la production du deuxième flux d'air (11), une zone de forme hélicoïdale ou en forme de spirale étirée dans le sens de la longueur.

2. Diffuseur d'air selon la revendication 1, **caractérisé en ce que** le tourbillon du flux d'air (20) au moins au nombre de un est réglable entre une valeur maximale dans le cas de la caractéristique à effet dispersé (12), et une valeur minimale dans le cas de la caractéristique à effet concentré (13).

3. Diffuseur d'air selon la revendication 1 ou 2, **caractérisé par** au moins un dispositif de dosage (3, 17) avec lequel la circulation de l'air et / ou le débit d'air et / ou la vitesse de l'air et / ou la direction de diffusion du flux d'air (20) se diffusant peut être modifié(e) pour la production du tourbillon.

4. Diffuseur d'air selon l'une quelconque des revendications précédentes, **caractérisé en ce que** le premier et / ou le deuxième flux d'air partiel (9, 10) est formé à partir de plusieurs flux d'air sous-jacents.

5. Diffuseur d'air selon l'une quelconque des revendications précédentes, **caractérisé en ce que**, dans le cas de la caractéristique à effet dispersé (12), seulement le deuxième flux d'air partiel (9) est activé.

6. Diffuseur d'air selon l'une quelconque des revendications précédentes, **caractérisé en ce que**, dans le cas de la caractéristique à effet concentré (13), seulement le premier flux d'air partiel (10) est activé.

7. Diffuseur d'air selon l'une quelconque des revendications précédentes, **caractérisé en ce que** le deuxième flux d'air partiel (11) est superposé au premier flux d'air partiel (10) avec un tourbillon variable, faisant que le premier flux d'air partiel (10) est déstabilisé et déployé en forme d'éventail.

8. Diffuseur d'air selon l'une quelconque des revendications précédentes, **caractérisé en ce que** le dispositif déflecteur d'air (5) est conçu de manière telle, qu'il est prévu, dans la zone de diffusion du dispositif déflecteur d'air (5), une zone centrale (5.4) et une zone extérieure (5.5), où la zone centrale (5.4) produit le premier flux d'air partiel (9, 11), et où la zone extérieure (5.5) produit le deuxième flux d'air partiel (10).

9. Diffuseur d'air selon l'une quelconque des revendications 3 à 8, **caractérisé en ce que** le dispositif de dosage (3) est conçu de manière telle, que les différents débits des flux d'air partiels et un rapport des débits massiques, du premier sur le deuxième flux d'air partiel (9, 10), soient réglables.

10. Diffuseur d'air selon l'une quelconque des revendications 3 à 9, **caractérisé en ce que** le dispositif de dosage (3, 17) règle aussi bien la répartition du flux d'air fourni (9) au moins au nombre de un, sur les différents conduits partiels (5.4, 5.5), ainsi que le dosage dudit flux d'air fourni.

11. Diffuseur d'air selon l'une quelconque des revendications 3 à 10, **caractérisé en ce qu'**il est prévu, comme dispositif de dosage (3), un dispositif de réglage (17) qui présente un double volet (17.1, 17.2) commandé au moyen d'une came (16) ou d'une cinématique.

12. Diffuseur d'air selon la revendication 11, **caractérisé en ce que** le dispositif de réglage (17) est relié directement, par un arbre, à un organe de commande.

13. Diffuseur d'air selon l'une quelconque des revendications précédentes, **caractérisé en ce que** des moyens servant au réglage (3, 17) du flux d'air (20) au moins au nombre de un se diffusant et / ou au réglage d'au moins un flux d'air partiel (9, 10) sont disposés dans le climatiseur (21).

14. Procédé de diffusion d'air pour un diffuseur d'air (1) selon l'une quelconque des revendications précédentes, dans un véhicule automobile, avec au moins un flux d'air fourni (8), où une caractéristique de diffusion du diffuseur d'air (1) est modifiée par un tourbillon réglable dans le cas d'au moins un flux d'air (20) se diffusant, où la caractéristique de diffusion peut être modifiée entre une caractéristique à effet dispersé (12) et une caractéristique à effet concentré (13), où, pour le réglage du tourbillon, le flux d'air fourni (8) est divisé en au moins deux flux d'air partiels (9, 10), et un premier flux d'air partiel (10) est un flux d'air de noyau (10) sans tourbillon, et un deuxième flux d'air partiel (9) est un flux d'air d'enveloppe (11) soumis à un tourbillon réglable, et le flux d'air de noyau (10) est influencé par le flux d'air d'enveloppe (11), ou bien le flux d'air d'enveloppe (11) est influencé par le flux d'air de noyau (10), **caractérisé en ce que** le dispositif déflecteur d'air (5) présente, pour la production du deuxième flux d'air (11), une zone de forme hélicoïdale ou en forme de spirale étirée dans le sens de la longueur.

15. Procédé de diffusion d'air selon la revendication 14, **caractérisé en ce que** le tourbillon du flux d'air (20) au moins au nombre de un est réglé entre une valeur maximale dans le cas d'une caractéristique à effet dispersé (12), et une valeur minimale dans le cas d'une caractéristique à effet concentré (13).

16. Procédé de diffusion d'air selon la revendication 14 ou 15, **caractérisé en ce que** le tourbillon est réglé par une modification d'une circulation de l'air et / ou d'un débit d'air et / ou d'une vitesse de l'air et / ou d'une direction de diffusion du flux d'air (20) au moins au nombre de un se diffusant.

17. Dispositif de diffusion d'air selon la revendication 16, **caractérisé en ce que** le flux d'air fourni (8) au moins au nombre de un est réglé par au moins un dispositif de dosage (3, 17) et / ou par au moins un dispositif déflecteur d'air (5, 17), dispositif de dosage et dispositif déflecteur d'air avec lesquels la circulation de l'air et / ou le débit d'air et / ou la vitesse de l'air et / ou la direction de diffusion du flux d'air (20) se diffusant sont modifié(e)s pour la production du tourbillon.

18. Procédé de diffusion d'air selon l'une quelconque des revendications 14 à 17, **caractérisé en ce que** le premier et / ou le deuxième flux d'air partiel (9, 10) est formé à partir de plusieurs flux d'air sous-jacents.

19. Procédé de diffusion d'air selon l'une quelconque des revendications 14 à 18, **caractérisé en ce que**, pour le réglage de la seule caractéristique à effet dispersé (12), seulement le deuxième flux d'air partiel (11) est activé.

20. Procédé de diffusion d'air selon l'une quelconque des revendications 14 à 18, **caractérisé en ce que**, pour le réglage de la seule caractéristique à effet concentré (13), seulement le premier flux d'air partiel (10) est activé.

21. Procédé de diffusion d'air selon l'une quelconque des revendications 14 à 18, **caractérisé en ce que** le deuxième flux d'air partiel (9) est superposé au premier flux d'air partiel (10) avec un tourbillon variable, faisant que le premier flux d'air partiel (10) est déstabilisé et déployé en forme d'éventail.

22. Procédé de diffusion d'air selon l'une quelconque des revendications 14 à 21, **caractérisé en ce que** les différents débits des flux d'air partiels et un rapport des débits massiques, du premier sur le deuxième flux d'air partiel, sont réglés avec un dispositif de dosage (3).

23. Procédé de diffusion d'air selon l'une quelconque des revendications 14 à 22, **caractérisé en ce qu'**une répartition du flux d'air fourni (8) au moins au nombre de un, sur les différents conduits partiels (5.4, 5.5), ainsi que le dosage dudit flux d'air fourni, sont réglés avec le dispositif de dosage (3).

24. Système de climatisation pour un véhicule automobile comprenant au moins un diffuseur d'air selon l'une quelconque des revendications 1 à 13.
